# FASCICULE DE BREVET EUROPEEN

(11) **EP 0 335 768 B1**
(45) Date de publication et mention de la délivrance du brevet: **09.02.1994**
(21) Numéro de dépôt: 89400756.6
(22) Date de dépôt: 17.03.1989
(51) Int. Cl.: H04M 17/02

(54) **Système de transmission d'informations à pré-paiement**
Informationsübertragungssystem mit Vorauszahlung
Pre-payment information transmission system

(30) Priorité: 28.03.1988 FR 8804015
(43) Date de publication de la demande: 04.10.1989
(73) Titulaire: SCHLUMBERGER INDUSTRIES, F-92120 Montrouge (FR)
(72) Inventeur: Barraud, Claude, F-75007 Paris (FR); Guion, Christian, F-91370 Verrières le Buisson (FR); Poilleux, Jean Loup, F-92170 Vanves (FR)
(74) Mandataire: Hasenrader, Hubert

(56) Documents cités:
- EP-A- 0 115 240
- EP-A- 0 188 139
- EP-A- 0 200 847
- IBM DISCLOSURE BULLETIN, vol. 26, no. 1, juin 1983, pages 199-201, New York, US; W.D. Hopkins: "Transaction incrementing message authentication key"
- TELECOM REPORT (SIEMENS), vol. 9, no. 3, mai/juin 1986, pages 218-225, Berlin, DE; W. HEBERLE et al.: "Mit Ökart bargeldlos telefonieren"

## Description

La présente invention a pour objet une installation téléphonique de transmission d'informations à pré-paiement et notamment à pré-paiement par carte à mémoire.

De façon plus précise mais non exclusive, l'invention concerne une telle installation appliquée au cas d'un poste téléphonique d'intérieur à pré-paiement par cartes, c'est-à-dire au cas d'un poste téléphonique installé dans un lieu privé ou éventuellement public et dans lequel l'acquittement de la taxe téléphonique se fait principalement, à l'aide de cartes à mémoire sans qu'il y ait à payer un abonnement pour ce poste téléphonique. L'invention est particulièrement intéressante dans le cas où la taxation téléphonique se fait par comptage d'impulsions de taxation émises au niveau d'un central téléphonique avec pré-paiement immédiat par l'usager. En effet, on comprend que dans ce cas il faut éviter que le poste téléphonique à pré-paiement ne puisse être remplacé par un poste normal auquel cas les communications téléphoniques pourraient être obtenues gratuitement par un fraudeur puisqu'il n'y a pas d'abonnement.

Plus généralement l'invention s'applique à tous les cas où il y a lieu d'établir une authentification réciproque entre un téléphonique et une ligne de transmission matérielle ou non avant d'autoriser l'établissement d'échanges d'informations.

Pour résoudre ce problème, on a proposé la solution suivante : lors de la phase initiale d'établissement de la communication téléphonique on échange entre l'émetteur et le récepteur des grandeurs codées permettant de contrôler l'accès à la communication. Un tel système ne résout que partiellement le problème. On a proposé également un codage de l'information à transmettre au niveau de l'émetteur et un décodage symétrique au niveau du récepteur. Cependant la transmission de l'information se faisant sous forme de signaux de fréquence analogiques les opérations de codage et de décodage sont relativement complexes.

Le document EP-A-0 188 139 décrit un système de surveillance d'appareils téléphoniques publics à pré-paiement. Ce système n'est pas applicable à des appareils téléphoniques raccordés au réseau dans des lieux privés et pour lesquels aucun abonnement n'est prévu.

Pour remédier à cet inconvénient, un objet de l'invention est de fournir un tel système de communications téléphoniques qui permette de contrôler l'autorisation de communication durant toute la durée de celle-ci et qui soit de plus compatible avec la transmission d'informations sous forme de signaux analogiques de fréquence et qui enfin permette de déjouer toutes les tentatives de fraude y compris par un enregistrement des signaux échangés lors de l'établissement de communications précédentes.

Pour atteindre ce but, l'installation téléphonique de transmission d'informations à pré-paiement comprend :
- un poste téléphonique raccordé à une ligne de transmission desdites informations;
- des moyens pour émettre des signaux de taxation déterminant les instants où des paiements doivent être effectués;
- des moyens de contrôle de paiement pour émettre un signal d'acquittement dont l'état dépend du fait qu'un paiement a été effectué ou non en réponse à un signal de taxation;
- un module de contrôle monté sur ladite ligne de transmission et associé audit poste téléphonique;
ladite installation se caractérisant en ce que ledit poste téléphonique est du type sans abonnement et raccordable à ladite ligne de transmission et en ce qu'elle comprend en outre des moyens pour appliquer audit poste téléphonique et audit module des signaux de synchronisation, ledit module et ledit poste téléphonique comportant chacun des moyens pour mettre en oeuvre un algorithme commun ALG à l'apparition de chaque signal de synchronisation pour élaborer des informations d'authentification respectivement Kᵢ et K'ᵢ qui dépendent respectivement au moins des informations d'authentification précédentes Kᵢ₋₁ ; ledit poste téléphonique comprenant en outre des moyens (146, 166) pour émettre vers ledit module ladite information d'authentification ; et ledit module comprenant des moyens pour émettre vers ledit poste téléphonique une information initiale d'authentification Kₒ à la réception d'un signal représentatif du début de l'utilisation dudit poste téléphonique et des moyens pour comparer l'information d'authentification élaborée Kᵢ à l'information d'authentification K'ᵢ reçue dudit poste téléphonique ; et en ce qu'elle comprend en outre des moyens pour inhiber ladite transmission d'informations en réponse à ladite comparaison et à l'état dudit signal d'acquittement si cette comparaison n'indique pas le reçu d'un signal d'authentification valable.

De préférence ledit terminal n'élabore ladite valeur d'authentification K'ᵢ que si ledit signal d'acquittement est dans on état qui correspond au fait que le paiement a été effectué.

De préférence encore lesdits signaux de taxation constituent également les signaux de synchronisation.

De toutes façons l'invention sera mieux comprise à la lecture de la description qui suit de plusieurs modes de mise en oeuvre de l'invention donnés à titre d'exemples non limitatifs. La description se réfère au dessin annexé sur lequel :
La figure 1 est une vue d'ensemble simplifiée du système téléphonique selon l'invention ;
La figure 2 montre les circuits d'un module de contrôle;
La figure 3 montre les circuits d'un poste téléphonique;
La figure 4 est un diagramme des temps montrant un premier mode d'élaboration des signaux d'authentification ; et
La figure 5 est un diagramme des temps montrant un deuxième mode d'élaboration des signaux d'authentification.

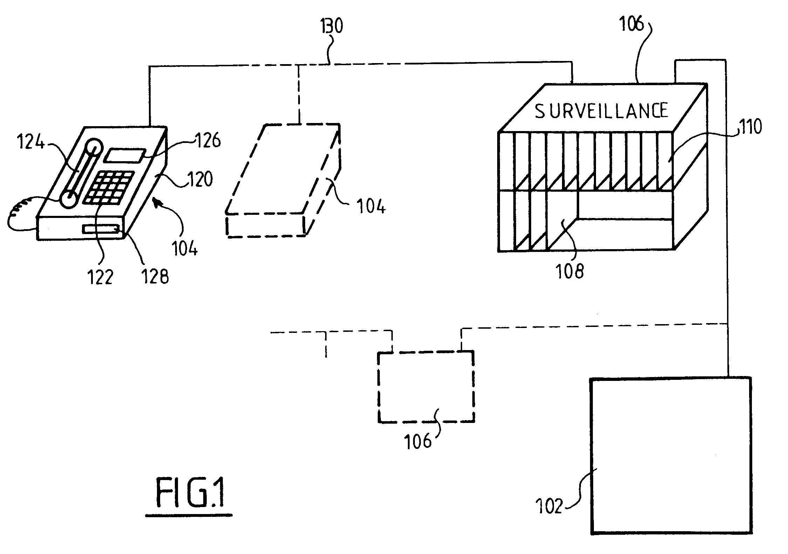

En se référant tout d'abord à la figure 1, on va décrire l'ensemble d'un système de transmission d'informations selon l'invention, appliqué au cas d'un poste téléphonique fixe à pré-paiement par cartes à mémoire.

Il comprend un central téléphonique 102, des postes téléphoniques, seul le poste 104 étant représenté sur la figure 1, et un dispositif de surveillance 106 monté entre le central 102 et les postes téléphoniques 104. Plus précisément au central 102 peuvent être associés plusieurs dispositifs de surveillance tels que 106, chaque dispositif de surveillance 106 étant relié à plusieurs postes 104.

Le dispositif de surveillance 106 comprend autant de dispositifs de contrôle ou modules de contrôle 108 qu'il y a de postes associés au dispositif 106, chaque module étant associé à un poste. On a également représenté l'alimentation autonome 110 du dispositif de surveillance 106. Le dispositif de surveillance 106 est disposé en un lieu non accessible aux usagers des terminaux téléphoniques.

Le poste téléphonique 104 comprend de façon connue un boitier 120 muni sur sa face supérieure d'un clavier 122 pour composer le numéro d'appel, et, de préférence, un dispositif d'affichage 126, par exemple à cristaux liquides et un combiné téléphonique 124 . Le poste téléphonique 104 comprend en outre un dispositif de lecture/écriture de cartes à mémoire 128 dont on voit la fente d'introduction sur la face avant du boitier 120. Bien entendu le clavier 122 pourrait être monté sur le combiné téléphonique 124.

Avant de décrire en détails la structure et le fonctionnement du système selon l'invention, on va en exposer ci-après le principe.

Le module de contrôle 108 sert à s'assurer que le poste téléphonique qui lui est associé est bien celui qui est autorisé à fonctionner à l'emplacement où il est branché. En d'autres termes le module 108 sert à authentifier le poste 104. Le poste 104, outre ses fonctions téléphoniques habituelles, sert à s'assurer que, avant l'établissement où la poursuite d'une communication téléphonique, le montant de la taxe a bien été prélevé sur la carte de l'usager.

La fonction d'authentification est réalisée de la manière suivante : à chaque impulsion de taxation émise par central 102, le module de contrôle 108 calcule une valeur d'authentification Kᵢ par mise en oeuvre d'un algorithme ALG qui dépend au moins de la valeur d'authentification précédente K′ᵢ₋₁. La valeur K′ᵢ₋₁ est transmise, via la ligne téléphonique, au module de contrôle 108. Les valeurs Kᵢ et K′ᵢ sont comparées. Si elles ne sont pas identiques ou correspondantes, la ligne téléphonique est inhibée.

La vérification de l'acquittement de la taxe téléphonique est réalisée par le poste téléphonique 104 de la manière suivante : A la réception d'une impulsion de taxation, le lecteur de cartes s'assure que le solde disponible dans la mémoire de la carte est au moins égal au montant de la taxe à payer, et il décrémente le solde dans la carte d'un montant correspondant à la taxe. Lorsque cette opération a été effectuée le poste téléphonique calcule la valeur d'authentification K′ᵢ. En conséquence si la taxe n'est pas prélevée, la valeur K′ᵢ n'est pas émise. Le module 108 ne peut donc effectuer la comparaison et la ligne téléphonique est inhibée.

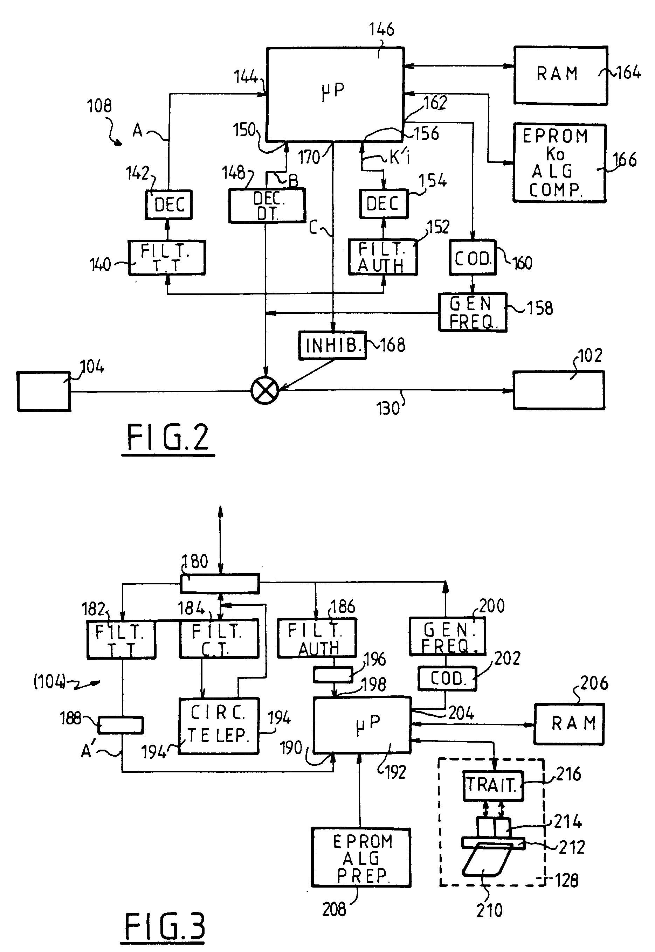

En se référant maintenant à la figure 2, on va décrire en détails les circuits principaux du module de contrôle 108. Le module 108 est monté sur la ligne 130. Il reçoit du central 102 les signaux de taxation TT et le signal de décroché DT de l'appelé. Il reçoit du poste téléphonique des signaux représentatifs des valeurs d'authentification K′ᵢ.

Le module de contrôle 108 comprend un premier filtre passe bande 140 qui est centré sur la fréquence du signal de taxation TT par exemple 12kHz. A la réception d'un signal TT un circuit de décodage et de mise en forme 142 délivre un signal caractéristique A qui est appliqué à une entrée 144 d'un microprocesseur 146 gérant l'ensemble du module de contrôle. Le module 108 comporte aussi un circuit 148 de détection du "décroché téléphonique". Ces circuits sont bien connus. Ils fonctionnent par exemple en détectant les variations d'intensité du courant en ligne entre les états décroché et raccroché du poste téléphonique. Le circuit 148 émet un signal spécifique B, lorsque le "décroché" est détecté, qui est appliqué à une entrée 150 du microprocesseur 146. Le module 108 comprend un deuxième filtre 152 qui est centré sur la fréquence utilisée pour émettre les signaux d'authentification Kᵢ et K′ᵢ. L'élaboration de ces signaux sera explicitée ultérieurement.

Le filtre 152 est associé à un circuit de décodage 154 qui délivre la valeur Kᵢ d'authentification. La valeur Kᵢ est appliqué à l'entrée 156 du microprocesseur 146.

Le module 108 comprend aussi un générateur de fréquence 158 commandé par un circuit de codage 160 lui-même commandé par une valeur numérique apparaissant sur la sortie 162 du microprocesseur 146. Comme on l'expliquera ultérieurement le générateur 158 sert à élaborer un signal représentatif de la valeur initiale d'authentification Kₒ. Le microprocesseur 146 est associé à une mémoire de travail 164 du type RAM et à une mémoire de programme 166 du type EPROM. La mémoire de programme 166 contient, outre le programme de gestion globale du module 108, les programmes spécifiques ALEAT, ALG et COMP.

Le programme ALEAT sert à élaborer une valeur aléatoire Kₒ qui est la valeur initiale d'authentification. Le programme ALG est un algorithme qui permet d'élaborer à partir d'une valeur d'authentification Kᵢ₋₁ et d'autres paramètres la valeur d'authentification Kᵢ. Le programme ALG sert par example à la mise en oeuvre d'un algorithme de codage du type D.E.S. Enfin le programme COMP commande la comparaison par le microprocesseur 146 de deux valeurs numériques, typiquement les valeurs d'authentification Kᵢ et K′i. Le programme COMP contient également l'équivalent d'une constante de temps T₁. Il élabore un signal d'inhibition si le module de contrôle n'a pas reçu un signal d'authentification K′ᵢ dans un délai T₁ à partir de la réception du signal de taxation. Le module 108 comporte également un circuit d'inhibition 168 de la ligne 130 lorsqu'un signal de commande C apparait sur la sortie 170 du microprocesseur 146.

En se référant à la figure 3 on va maintenant décrire le poste téléphonique 104. Les signaux apparaissant à l'entrée 180 du poste 104 sont appliqués à trois filtres 182, 184 et 186. Le filtre 182 est identique au filtre 140 de la figure 2. Il sert a détecter la réception d'un signal de taxation TT. A l'apparition d'un tel signal, le circuit de mise en forme 188 délivre un signal A′ qui est appliqué à l'entrée 190 d'un microprocesseur 192. Le filtre 184 est un filtre dont la bande passante correspond aux fréquences vocales typiquement 300Hz à 3400Hz. La sortie du filtre 184 est reliée au circuit "téléphonique" 194 du poste téléphonique.

Le filtre 186 est identique au filtre 152 de la figure 2. Il est centré sur la plage de fréquences correspondant aux signaux d'authentification Kᵢ. La sortie du filtre 186 attaque un convertisseur fréquence/numérique 196 qui délivre la valeur du signal d'authentification reçu. Comme on l'expliquera ultérieurement il s'agit de la valeur initiale d'authentification Kₒ. La valeur Kₒ est appliquée à l'entrée 198 du microprocesseur 192.

Le poste téléphonique comprend en outre un générateur de fréquence 200 associé à un circuit de commande 202 qui reçoit lui-même les valeurs numériques d'authentification K′ᵢ apparaissant à la sortie 204 du microprocesseur 192. Le microprocesseur 192 est associé à une mémoire de travail 206 du type RAM et à une mémoire de programme 208 qui est par exemple du type EPROM.

Comme on l'a déjà indiqué brièvement, le poste 104 comprend un dispositif de lecture/écriture de cartes à mémoire 28. Dans l'exemple décrit il s'agit de cartes à mémoire électronique. La carte 210 comprend un circuit intégré comportant essentiellement une mémoire. La mémoire est par exemple du type PROM ou EPROM. Une zone protégée de mémoire contient une information fixe IF d'identification du type de carte. Le reste de la mémoire sert à écrire des soldes successifs disponibles. Dans le cas d'une mémoire PROM, celle-ci contient un certain nombre de points de mémoire qui sont initialement vierge (état 0). Chaque point de mémoire correspond à un montant unitaire. Le solde est modifié en faisant passer de façon irréversible de l'état 0 à l'état 1 un nombre de points de mémoire correspondant au montant à débiter. Le passage de l'état 0 à l'état 1 est obtenu en appliquant au point mémoire considéré une tension d'écrire.

Le dispositif de lecture/écriture comprend des moyens de guidage 212 dans lesquels l'usager introduit sa carte 210 et qui amènent cette carte dans une position de traitement où les plages externes de contact électrique de la carte sont connectées aux éléments de connexion de la tête de lecture/écriture du lecteur 128. Un circuit de traitement 216 permet de commander la lecture d'informations enregistrées dans la mémoire de la carte ou l'écriture de nouvelles informations dans la mémoire. Le circuit de traitement 216 est contrôlé par le microprocesseur 192.

Avant de décrire en détail le fonctionnement du système de communications téléphoniques représenté sur les figures 1 à 3, on va décrire deux modes d'élaboration des signaux de fréquence représentatifs des valeurs d'authentification Kᵢ et K′ᵢ.

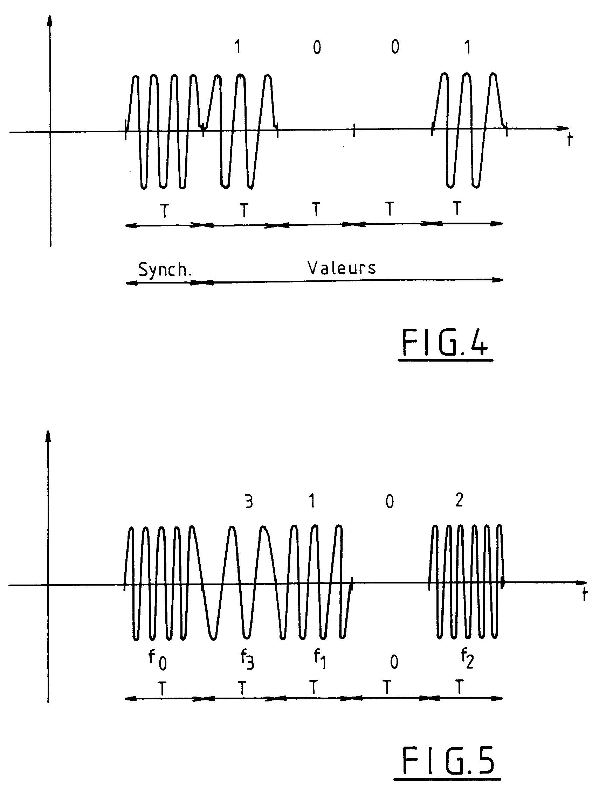

La figure 4 illustre un premier mode d'élaboration d'un signal de valeur d'authentification. Il comprend 5 périodes de durées égales T. La première période est une période de synchronisation qui a toujours la valeur 1. Les quatre autres périodes T sont des périodes significatives correspondant chacune à la valeur 1 ou à la valeur 0. La valeur d'authentification Kᵢ s'exprime donc à l'aide de 4 valeurs binaires. La valeur 1 correspond à la présence d'un signal de fréquence et d'amplitude constante. La valeur 0 correspond à l'absence de ce signal. Le signal de fréquence a de préférence une fréquence de l'ordre de 18kHz. Ainsi cette fréquence peut être facilement distinguée de la fréquence du signal de taxation qui est de l'ordre de 12 kHz et de la fréquence du signal vocal qui est inférieure à 3,5kHz.

Selon le mode d'élaboration représenté sur la figure 5, le signal correspondant à une valeur d'authentification est également divisé en 5 périodes de durées égale T. La première période est une période de synchronisation, les quatre périodes suivantes étant les périodes significatives. Durant la période de synchronisation un signal de fréquence f1 est toujours présent. Durant chacune des autres périodes on peut n'avoir aucun signal (valeur 0) au avoir des signaux de fréquence f₁, f₂ ou f₃ (valeurs 1, 2 ou 3). Chaque période du signal d'authentification peut donc prendre une des quatre valeurs de 0 à 3. Comme chaque signal comporte 4 périodes significatives la valeur d'authentification peut prendre 4⁴ valeurs différentes. A titre d'exemple f₂ peut être égale à 18 kHz, f₁ à 16,5 kHz et f3 à 19,5 kHz. On peut ainsi aisément distinguer ces trois fréquences. La période T est par exemple égale à 20msec. Plus généralement les fréquences d'authentification doivent se situer en dehors des fréquences vocales et en dehors de la plage de fréquence du signal de taxation.

Il va de soi que le nombre de périodes pourrait être différent de 4. De même la durée de chaque période du signal pourrait ne pas être fixe mais dépendre de la fréquence du signal présent durant cette période..

En se reportant plus particulièrement aux figures 2 et 3 on va décrire le fonctionnement du système téléphonique complet.

Lorsque l'usager décroche le combiné 124 du poste téléphonique, le signal de décroché D.T. est reçu par le module de contrôle 108. Le décodeur 148 délivre alors le signal B qui est appliqué au microprocesseur 146. Ce signal initialise le déroulement du programme ALEAT mémorisé dans la mémoire 166. Ce programme permet d'élaborer un nombre aléatoire qui est la valeur initiale d'authentification Kₒ. Cette valeur est mémorisée dans la RAM 164. Puis la valeur Kₒ est convertie en un signal d'authentification correspondant. La forme particulière de ce signal dépend du mode choise d'élaboration de celui-ci. Si l'on utilise le mode de la figure 4, le circuit de codage 160 qui reçoit la valeur Kₒ commande le générateur de fréquence 158 pour que celui-ci délivre un signal de fréquence fₒ pendant la période de synchronisation de durée T puis selon la valeur des 4bits significatifs de Kₒ, pour chaque période T, il commande ou ne commande pas l'élaboration du signal de fréquence fₒ selon la valeur binaire de la période T considérée. Le générateur de fréquence 158 ne délivre donc que la fréquence fₒ. Si l'on utilise le mode d'élaboration de la figure 5, le généerateur 158 est organisé pour pouvoir délivrer une des trois fréquences f₁, f₂, f₃ ou, bien sûr, aucune fréquence. Le programme ALEAT détermine pour chacune des quatre périodes significatives la valeur de la fréquence (o, f₁, f₂ ou f₃) à élaborer.

Le poste téléphonique reçoit le signal d'authentification correspondant à la valeur Kₒ. Ce signal est reçu par le filtre 186 et décodé par le circuit 196. La valeur Kₒ est alors mémorisée temporairement dans la RAM 206.

L'usager introduit sa carte 210 dans le lecteur 28. Le circuit 216 vérifie que la carte peut effectivement donner accès à l'utilisation du poste téléphonique vérification de l'information IF et il bit le solde encore disponible dans la mémoire de la carte. Cette valeur de solde est affichée sur le dispositif d'affichage 126. Si le solde est nul ou inférieur au montant d' une unité de taxation téléphonique, le poste téléphonique est inhibé et la carte restituée. Dans la suite de la description on supposera que le solde est suffisant.

Lorsque le premier signal de taxe téléphonique est reçu simultanément par le module de contrôle 108 et par le poste téléphonique 104 les deux séries d'opérations suivantes vont se dérouler.

En ce qui concerne le poste téléphonique, lorsque le filtre 182 reçoit le signal de taxation, le décodeur 188 élabore le signal A′ qui est reçu par le microprocesseur 192. Cela initialise le déroulement du programme PREP. Le programme PREP contrôle le fonctionnement du lecteur 128 pour que celui-ci diminue le solde disponible dans la mémoire de la carte 210 d'un montant correspondant à la taxe à payer. Lorsque cette opération est terminée, le microprocesseur 192 commande la mise en oeuvre du programme ALG. Comme on l'a déjà indiqué ce programme permet d'élaborer une nouvelle valeur d'authentification à partir de la valeur précédente par mise en oeuvre d'un algorithme de codage du type DES. La valeur d'authentification K′₁ ainsi élaborée est mémorisée dans la RAM 206 à la place de la valeur Kₒ. Puis le générateur de fréquence 200 élaborer le signal d'authentification correspondant à K′₁.

Si l'on revient au module de contrôle 108, le déroulement du processus est le suivant. Lorsque le filtre 140 reçoit le signal de taxation TT le décodeur 142 émet vers le microprocesseur 146 le signal A. Cela initialise le déroulement du programme ALG. Le programme ALG élabore à partir de la valeur Kₒ la nouvelle valeur d'authentification K₁ qui est stockée dans la mémoire RAM 164 à la place de la valeur Kₒ. Puis le module 108 se met en attente de réception d'un signal d'authentification venant du poste téléphonique. Si ce signal n'est pas reçu dans un délai T₁ le circuit 168 commande l'inhibition de la ligne. Le délai T₁ est, par exemple, égal à 450m sec. Lorsque le signal d'authentification est reçu par le filtre 152 dans le délai voulu T₁, le décodeur 154 fournit au microprocesseur 146 la valeur d'authentification correspondante K′₁. Puis le microprocesseur 146 compare la valeur K′₁ reçue à la valeur K₁ déjà élaborée (programme COMP). Si la comparaison est positive, la ligne 130 n'est plus inhibée et l'usager peut parler.

Durant la communication téléphonique, lorsqu'est émis le nouveau signal de taxation, les mêmes opérations vont se dérouler à nouveau. Le poste téléphonique prélève sur la carte un nouveau montant et il calcule la valeur K′₂ d'authentification et la transmet au module de contrôle 108. Celui-ci calcule la nouvelle valeur K₂ d'authentification et la compare à la valeur reçue K′₂.

Le processus se répète à chaque apparation d'un signal de Taxation jusqu'à la fin de la communication téléphonique où jusqu'à ce que le montant disponible dans la carte soit épuisé.

Il découle de la description précédente que le système de communication téléphonique selon l'invention répond effectivement aux conditions de sécurité imposées.

L'algorithme ALG comporte des paramètres spécifiques où un poste téléphonique donné et à son module de contrôle associé. Il est donc très difficile de remplacer un poste autorisé par un autre poste puisque cela imposerait au fraudeur de connaître l'ensemble du programme ALG de codage. De plus même si le fraudeur parvenait à recopier ce programme pour le charger dans la mémoire d'un poste "frauduleux", il lui fraudrait de plus connaître la valeur initiale Kₒ. Or cette valeur est délivrée par le module de contrôle qui met en oeuvre le programme ALEAT d'élaboration de nombres pseudo-aléatoires.

On a décrit ci-dessus des modes de réalisation préférés de l'invention. Il va de soi que l'invention peut présenter de nombreuses variantes. En particulier la carte à mémoire électronique pourrait êtr remplacée par une carte à mémoire magnétique si l'on accepte une moindre sécurité au niveau du mode de paiement. De même, en plus de paiement par cartes, le poste téléphonique pourrait être équipé d'un sélecteur de pièces de monnaie, le paiement, à chaque impulsion de taxation, pouvant se faire par introduction de pièces.

Selon un autre mode de réalisation de l'invention, le poste téléphonique peut être du type à table de taxation interne. De tels postes sont bien connus. Il comprend des circuits de taxation qui contiennent en mémoire des informations sur la durée d'une unité de communication téléphonique et sur son montant en fonction de la localisation du numéro appelé. Les circuits émettent des impulsions de taxation au début de chaque unité de temps qui indiquent de plus le montant de l'unité : Ces informations sont transmises au lecteur de carte qui modifie le solde en conséquence si cela est possible.

Selon l'invention, avec ce type de poste, deux solutions peuvent être adoptées. La première solution consiste à prévoir que l'impulsion de taxation émise par le circuit de taxation du poste téléphonique soit également transmise au module de contrôle. Bien entendu dans ce cas le central téléphonique n'émet plus de signaux de taxation. La deuxième solution consiste à détecter le signal de décroché DT qui initialise le processus d'authentification. Ce signal initialise dans le terminal et dans le module de contrôle l'émission de signaux de synchronisation à périodicité fixe. A l'apparition de chaque signal de synchronisation une nouvelle information d'authentification est élaborée. En ce qui concerne le poste téléphonique, avant l'émission du signal d'authentification, le microprocesseur du poste téléphonique s'assure que le montant à prélever pour l'unité de temps en cours a effectivement été prélevé. Selon une variante de ce mode de réalisation, le contrôle de l'authentification et le contrôle du paiement des taxes peuvent être effectués séparément. S'il y a défaillance de l'authentification c'est le module de contrôle qui inhibe la communication téléphonique, s'il y a défaillance de paiement c'est le poste téléphonique qui inhibe la communication.

Enfin il va de soi que l'invention peut s'appliquer à d'autres types de transmissions d'informations à pré-paiement que des communications téléphoniques. Elle peut par exemple s'appliquer à des réseaux télématiques.

## Revendications

1. Installation téléphonique pour la transmission d'informations à prépaiement comprenant :
- un poste téléphonique (104) raccordé à une ligne de transmission (130) desdites informations;
- des moyens (102) pour émettre des signaux de taxation (TT) déterminant les instants où des paiements doivent être effectués;
- des moyens de contrôle de paiement pour émettre un signal d'acquittement dont l'état dépend du fait qu'un paiement a été effectué ou non en réponse à un signal de taxation;
- un module de contrôle (108) monté sur ladite ligne de transmission et associé audit poste téléphonique;
ladite installation se caractérisant en ce que ledit poste téléphonique est du type sans abonnement et raccordable à ladite ligne de transmission et en ce qu'elle comprend en outre des moyens pour appliquer audit poste téléphonique et audit module des signaux de synchronisation (102), ledit module et ledit poste téléphonique comportant chacun des moyens (146, 166; 192, 208) pour mettre en oeuvre un algorithme commun ALG à l'apparition de chaque signal de synchronisation pour élaborer des informations d'authentification respectivement Kᵢ et K'ᵢ qui dépendent respectivement au moins des informations d'authentification précédentes Kᵢ₋₁ ; ledit poste téléphonique comprenant en outre des moyens (146, 166) pour émettre vers ledit module ladite information d'authentification ; et ledit module comprenant des moyens pour émettre vers ledit poste téléphonique une information initiale d'authentification Kₒ à la réception d'un signal (B) représentatif du début de l'utilisation dudit poste téléphonique et des moyens (146, 166) pour comparer l'information d'authentification élaborée Kᵢ à l'information d'authentification K'ᵢ reçue dudit poste téléphonique ; et en ce qu'elle comprend en outre des moyens (168) pour inhiber ladite transmission d'informations en réponse à ladite comparaison et à l'état dudit signal d'acquittement si cette comparaison n'indique pas le reçu d'un signal d'authentification valable.

2. Système selon la revendication 1, caractérisé en ce que ledit poste téléphonique n'élabore ladite valeur d'authentification K'ᵢ que si ledit signal d'acquittement est dans son état qui correspond au fait que le paiement a été effectué.

3. Système selon l'une quelconque des revendications 1 et 2, caractérisé en ce qu'il comprend un central téléphonique (102) relié à ladite ligne de transmission (130) et en ce que lesdits signaux de taxation (TT) sont émis par ledit central.

4. Système selon l'une quelconque des revendications 1 à 3, caractérisé en ce que lesdits signaux de taxation (TT) constituent également lesdits signaux de synchronisation.

5. Système selon l'une quelconque des revendications 1 à 4, caractérisé en ce que lesdits moyens de contrôle de paiement comprennent des moyens (128) pour lire une information de montant disponible dans la mémoire d'un support d'information amovible (210) et pour modifier ledit montant, si cela est possible, en réponse audit signal de taxation.

6. Système selon l'une quelconque des revendications 1 à 5, caractérisé en ce que ledit poste téléphonique (104) est monté sur ladite ligne de transmission (130).

7. Système selon l'une quelconque des revendications 1 à 6, caractérisé en ce que chaque information d'authentification comprend une succession de valeurs binaires, un premier état binaire consistant dans l'absence d'un signal, l'autre état binaire consistant dans la présence d'un signal de fréquence.

8. Système selon l'une quelconque des revendications 1 à 6, caractérisé en ce que chaque information d'authentification est constituée par une succession de signaux de fréquence dont la fréquence est choisie parmi n fréquences préétablies.

9. Système selon l'une quelconque des revendications 1 à 8, caractérisé en ce que les moyens de comparaison du module de contrôle comportent des moyens (168) pour commander l'inhibition de la transmission d'informations si l'information d'authentification K'ᵢ émise par le poste téléphonique n'est pas reçue dans une période de temps prédéterminée (T1) après l'émission de l'impulsion de synchronisation correspondante (TT).

## Claims

1. Prepayment information transmission system comprising:
- a terminal (104) connected to a line (130) for transmitting said information;
- means (102) for emitting charging signals (TT) determining instants at which payment is required;
- payment verification means for emitting a receipt signal whose state depends on whether or not payment has been performed in response to a charging signal;
- a verification module (108) connected to said transmission line and associated with said terminal;
said installation being characterized in that said terminal is of the type without any call billing and connectable to said transmission line and in that it further comprises means for applying synchronizing signals to said terminal and said module, said module and said terminal each comprising means for implementing a common algorithm ALG upon the occurrence of each synchronizing signal in order to generate respective authentication information Kᵢ and K'ᵢ depending, in each case, at least on the preceding authentication information Kᵢ₋₁; said terminal further comprising means (146, 166) to provide the authentication information to the module, and said module comprising means for providing initial authentication information Kₒ to the terminal, authentication information Kᵢ generated by the module with authentication information K'ᵢ received from the terminal; and in that it further comprises means for inhibiting said information transmission in response to such comparison and to the state of said charging signal if such comparison does not indicate that a valid authentication signal has been received.

2. System according to claim 1, characterized in that said terminal generates said authentication value K'ᵢ only if said receipt signal is in its state corresponding to the fact that payment has been performed.

3. System according to any one of claims 1 and 2, characterized in that it comprises a telephone exchange (102) connected to said transmission line (130) and in that said charging signals (TT) are generated by said exchange.

4. System according to any one of claims 1 to 3, characterized in that said charging signals (TT) also constitute said synchronizing signals.

5. System according to any one of claims 1 to 4, characterized in that said payment verification means include means (128) for reading information concerning an amount available in the memory of a removable information medium (210) and for modifying said amount, where possible, in response to said charging signal.

6. System according to any one of claims 1 to 5, characterized in that said telephone set (104) is mounted on said transmission line (130).

7. System according to any one of claims 1 to 6, characterized in that each authentication information comprises a succession of binary values, with a first binary state consisting in the absence of a signal and the other binary state consisting in the presence of a frequency signal.

8. System according to any one of claims 1 to 6, characterized in that each authentication information is constituted by a succession of frequency signals with the frequencies thereof being selected from a plurality n of pre-established frequencies.

9. System according to any one of claims 1 to 8, characterized in that the comparing means of the verification module comprise means (168) for controlling the inhibition of the transmission of information if the authentication information K'ᵢ generated by the telephone set is not received within a predetermined time period (T1) after the generating of the corresponding synchronizing pulse (TT).

## Patentansprüche

1. Telefonanlage für die Übertragung von Informationen mit Vorauszahlung mit:
- einer mit einer Informationsübertragungsleitung (130) der verbundenen Fernsprechstelle (104);
- Mitteln (102) zum Senden von Gebührenverrechnungssignalen (TT), die die Zeitpunkte bestimmen, zu welchen Zahlungen vorgenommen werden sollen;
- Zahlungskontrollmitteln zum Senden eines Entrichtungssignals, dessen Zustand davon abhängt, ob eine Zahlung in Beantwortung eines Gebührenverrechnungssignals vorgenommen wurde;
- einem auf der Übertragungsleitung angebrachten und der Fernsprechstelle zugeordneten Kontrollmodul (108);
dadurch gekennzeichnet, daß die Fernsprechstelle keinen Teilnehmeranschluß aufweist und an die Übertragungsleitung anschließbar ist und daß sie zudem Mittel zum Anlegen von Synchronisationssignalen (120) an die Fernsprechstelle und an das Modul enthält, wobei das Modul und die Fernsprechstelle jeweils Mittel (146, 166; 192, 208) zum Aufstellen eines gemeinsamen Algorithmus ALG aufweisen, wenn jedes zum Erstellen von Authentisierungsinformationen Kᵢ bzw. K'ᵢ, die jeweils mindestens von den vorangegangenen Authentisierungsinformationen Kᵢ₋₁ abhängig sind, geeignete Synchronisationssignal auftritt; wobei die Fernsprechstelle außerdem Mittel (146, 166) zum Senden der Authentisierungsinformation an das Modul enthält; wobei das Modul Mittel zum Senden an die Fernsprechstelle einer Anfangsauthentisierungsinformation Kₒ beim Empfang eines für den Anfang der Benutzung der Fernsprechstelle repräsentativen Signals (B) sowie Mittel (146, 166) zum Vergleichen der erstellten Authentisierungsinformation Kᵢ mit der von der Fernsprechstelle erhaltenen Authentisierungsinformation K'ᵢ aufweist; und daß sie zudem Mittel (168) zum Verhindern der Informationsübertragung als Reaktion auf den Vergleich und auf den Zustand des Entrichtungssignals aufweist, wenn dieser Vergleich nicht die Quittung eines gültigen Authentisierungssignals anzeigt.

2. System nach Anspruch 1, dadurch gekennzeichnet, daß die Fernsprechstelle den Authentisierungswert K'ᵢ nur erstellt, wenn sich das Entrichtungssignal in dem Zustand befindet, der der Tatsache entspricht, daß die Zahlung vorgenommen wurde.

3. System nach einem der Ansprüche 1 und 2, dadurch gekennzeichnet, daß es eine mit der Übertragungsleitung (130) verbundene Telefonzentrale (102) aufweist und daß die Gebührenverrechnungssignale (TT) von der Zentrale gesendet werden.

4. System nach einem der Ansprüche 1 und 3, dadurch gekennzeichnet, daß die Gebührenverrechnungssignale gleichzeitig die Synchronisierungssignale sind.

5. System nach einem der Ansprüche 1 und 4, dadurch gekennzeichnet, daß die Zahlungskontrollmittel Mittel (128) zum Lesen einer im Speicher eines beweglichen Informationsträgers (210) verfügbaren Betragsinformation und, gegebenenfalls, zum Verändern des Betrags als Reaktion auf das Gebührenverrechnungssignal aufweisen.

6. System nach einem der Ansprüche 1 und 5, dadurch gekennzeichnet, daß die Fernsprechstelle (104) auf der Übertragungsleitung (130) angebracht ist.

7. System nach einem der Ansprüche 1 und 6, dadurch gekennzeichnet, daß jede Authentisierungsinformation eine Folge von binären Werten aufweist, wobei ein erster binärer Zustand im Nichtvorhandensein eines Signals und der andere binäre Zustand im Vorhandensein eines Frequenzsignals besteht.

8. System nach einem der Ansprüche 1 und 6, dadurch gekennzeichnet, daß jede Authentisierungsinformation aus einer Folge von Frequenzsignalen besteht, deren Frequenz aus n vorherbestimmten Frequenzen ausgewählt ist.

9. System nach einem der Ansprüche 1 und 8, dadurch gekennzeichnet, daß die VergleichsMittel des Kontrollmoduls Mittel (168) zur Steuerung der Verhinderung der Informationsübertragung aufweist, wenn die von der Fernsprechstelle gesendete Authentisierungsinformation K'ᵢ in einer vorbestimmten Zeitspanne (T1) nach dem Senden des entsprechenden Synchronisierungsimpulses (TT) nicht erhalten wurde.
